# EUROPEAN PATENT APPLICATION

(11) **EP 1 895 220 A1**
(43) Date of publication of application: **05.03.2008**
(21) Application number: 06764343.7
(22) Date of filing: 23.05.2006
(51) Int. Cl.: F16L 1/24

(54) **IMPROVED ARTIFICIAL ELEMENT WHICH IS INTENDED FOR THE ANCHORING, INSTALLATION AND PROTECTION OF SUBMARINE OUTFALLS OR SUBMARINE PIPELINES ON SANDY OR NON-CONSOLIDATED SURFACES**

(30) Priority: 03.06.2005 ES 200501346
(71) Applicant: GUER INGENIERIA, S.L, 38297 Santa Cruz de Tenerife (ES)
(72) Inventor: SANTANA RIOS, Luis, Victoriano, 38297 Santa Cruz de Tenerife (ES)
(74) Representative: Ungria Lopez, Javier
(86) International application number: PCT/ES2006/000276
(87) International publication number: WO 2006/128929

(57) **Abstract**

It consists of a parallelepiped body (1) comprising a lower zone (2) provided with supports or legs (3) located in the corners, on which an upper parallelepiped zone (4) is connected, said upper zone having a trapezoidal section and with a lower central rectangular projection (6) and an upper rectangular recess (5). Both zones (2, 4) have the same length, but are offset linearly in order to define complementary tongue-and-groove coupling means for in-line assembly. The rectangular recess (5) define the bed for laying the submarine outfall or pipeline, the bed being covered with slabs (9) which are fixed to the upper zone (4) with rods. The elements or bodies (1) are also fixed to one another with vertical rods (15).

## Description

### OBJECT OF THE INVENTION

As stated in the title of this descriptive specification, the present invention relates to an improved artificial element, designed for the anchoring, installation and protection of submarine outfalls or submarine pipelines on sandy or non-consolidated sea-beds, whose special shape and studied design mean that it constitutes an element of great utility for the anchoring, location and protection of submarine outfalls or submarine pipelines on sandy sea-beds, where, due to its special form and the dynamic of the waters on the sea bottom, it rapidly settles down and becomes buried in the sand, being very advantageous with respect to the state of the art defined by other types of pieces or blocks having a similar purpose

The design of a submarine outfall is intimately linked to the geometry of the work (diameter, length, depth of discharge), to the characteristics of the marine climate and hydrodynamics of the work zone, and very particularly, to the technical solvency, experience and the availability of equipment on the part of the contractor. For this reason, it is difficult to be able to disengage the design work from the real construction possibilities; any attempt to exhaustively systematise the different possibilities of materials, techniques and study methods applicable will always leave us at a certain distance from the final solution.

The problem of the stability of the submarine outfall or submarine pipelines on the bottom of the sea is of primary importance for preventing breakings, which are always difficult and costly to repair. With that aim, attempts are generally made to have the pipeline laid in a ditch, as is done on land for laying pipelines, but opening a ditch in an non-consolidated medium is a complicated undertaking. One of the ways of laying a pipeline inside sand is to displace the sand by suction and leave the pipeline, such that it becomes buried in the sand by virtue of its own weight. Ditches can also be made using powerful, specialised and expensive submarine mechanical means.

The water on the sea-bed, with its variable movements, though they might be weak, disturb the sandy bed and displace the surface layers of the bottom from one side to the other, thereby burying the pipeline under several metres of sand, or just as likely leaving it exposed.

With rigid pipelines, even if assembled with robust joints having a certa in degree of freedom, it is difficult to meet the conditions required for preventing breakages. Flexible pipelines, on the other hand, require artificial weights so that they can be firmly anchored to the sea-bed and maintain the alignment imposed on them.

### PRIOR ART OF THE INVENTION

Anchorage by weights has given rise to numerous types of bulk and reinforced concrete pieces with very different concepts.

The most primitive and simplest system consists of creating a rudimentary cover on the basis of bags of cement and of aggregates, arranged at certain points of the pipeline. These bags were simply hooked up together by a piece of steel in order to be set up and it was left directly to the sea in order to wet the cement until it is set and thereby form a rudimentary anchorage. Storms, all the more so in the zone of a reef, would take care of destroying this shield of concrete pieces without any overall cohesion.

Later on, a series of prefabricated concrete blocks was used in various shapes and dimensions, provided with a clamp that sought to secure the pipeline to it. Occasionally, the fact was that the weight was secured to the pipeline rather than being the other way round. Indeed, the sea moving the sands on the sea-bed found it very easy to pass underneath the pipeline and undermine the foundation. It was therefore sufficient for a train of consecutive weights to have their ends more firmly secured than the intermediate ones, even if just by a small amount, for the middle part of the pipeline to find itself suspended, and thus break.

Other concrete bulk or reinforced blocks are used, either in the form of a semicircular tile or in the form of porticos similar to the protection provided on land for protecting pipelines against the later opening of ditches. These weights do not secure the pipeline and are easily tipped over by the movement of the water during storms and the subsequent morphological modifications of the sea-bed.

### DESCRIPTION OF THE INVENTION

In general terms, the improved artificial element, designed for the anchoring, installation and protection of submarine outfalls or submarine pipelines on sandy or non-consolidated sea-beds, forming the object of the invention, presents several variations compared to the foregoing which lead to an increase in effectiveness. This system of prefabricated blocks completely envelopes the pipeline, nevertheless leaving a considerable freedom of movement of the flexible pipeline without transmitting harmful mechanical stresses.

The artificial element that is advocated as the inventive object permits protections of submarine outfalls or submarine pipelines on sandy sea-beds sinking ever more into the substrate as time goes by and, therefore, increasing their stability in the event of storms.

It could be said that the invention concerns a piece that is both rigid and flexible at the same time. It is rigid from the point of view that grants total protection of the submarine outfall or submarine pipeline, preventing possible breakages thereof as a consequence of external phenomena. And it is flexible because in a certain way it adapts to the bathymetry existing on the sea-bed, as would occur in the case of an outfall in the strict sense without any protection. This flexibility, which permits the submarine outfall or submarine pipeline to adapt itself and be protected against changes which the sandy bottom might undergo, prevents breakage of that protection as a consequence of the existence of bending moments in unsupported parts of the sea-bed.

This kind of behaviour of the improved artificial element, designed for the anchoring, installation and protection of submarine outfalls or submarine pipelines on sandy or non-consolidated sea-beds, has been confirmed by carrying out a series of trials in a wave tank. With the aim of evaluating the behaviour of those pieces with time, these trials were conducted on a reduced scale according to the following methodology: at the beginning of a certain group of trials (characterised by the weight of the piece, its alignment, the wave period and the depth), the piece was laid as it would be in the prototype due to its own weight, in other words, with a certain level of sinking in the sandy substrate. The swell conditions of the trial were then proceeded to be generated, and as the trial progressed it could be seen how the piece increased its penetration into the substrate as a consequence of the wedge-shaped form of its legs together with the displacement of the particles of sand with the swell. The movement of the sand facilitated the sinking of the piece at the same time as the sand covered it. On reaching the final wave height, it was found that, in the majority of cases, the piece was largely buried in the sea-bed, consequently increasing its stability and functionality.

The results obtained from the trials permit the pieces to be dimensioned in line with the characteristics existing in the study zone such as depth, height of significant wave, the peak period and the obliquity of the alignment of the pieces in relation to the incident swell.

The characteristics that have just been commented on in relation to the proposed artificial piece are some of the main reasons why the weight of those pieces can be reduced in line with the conditions of the swell and environments existing in the study zone, So, for example:
- In shallow zones the breakage of the waves filters the energy incident on the outfall, permitting the weight of the pieces to be reduced.
- In zones with deep water, the influence of the sea-bed on the waves is minimal and so too consequently is the influence of the waves on the piece, thus also permitting the weight of the pieces to be reduced, as in the previous case.
- The zones of intermediate depth, where the waves and their energy are noticed by the pieces, the characteristics of the waves have a certain influence, above all their period. So, for example, the waves with the largest period are those which, at a certain point, can cause the greatest instability to those pieces.
- In zones in which the waves arrive with little obliquity in relation to the alignment of the outfall, the proposed artificial pieces guarantee a high stability as a consequence of the compression stresses existing between the pieces, which also increases the coherence between them.

So, the trials conducted in the wave tank were essential when it came to confirming the good functional and structural behaviour of the artificial piece in the protection of submarine outfalls or submarine pipelines, even guaranteeing an increase in the durability of them with time as a consequence of becoming buried in the substrate.

As a consequence of all this, it can be said that the proposed artificial elements guarantee a considerable improvement in the cost of protection for submarine outfalls or submarine pipelines in sandy sea-beds by considerably reducing the weight of the required pieces and permitting an improvement in the structural and functional behaviour of them as time progresses. These pieces are very stable independently of the study conditions, and at the same time their location on site at no time reduces the constructional viability of the work.
As far as its structure is concerned, the artificial element advocated as the inventive object is shaped in the form of a parallelepiped volume which maintains the ratios between sides of: 1.40 in height, 1.50 in width and a constant length of 2.50.
The size of the piece will be able to be varied at all times maintaining always these ratios, so that its behaviour can be adapted to the characteristics of the swell (wave height and period) and the depth.

For its formal description the piece can be split up into various zones: *Lower zone:*
It rests on four independent supports located at the corners of the lower volume, ending in a sharp edge shaped like the mouthpiece of a flute.
Between the legs are some openings on all sides of the lower zone These openings permit water currents to pass from one side to the other of the piece causing the material of the sea-bed to be dragged along and therefore facilitating the burial of the piece.
The part between the four legs is raised from the floor forming a bulge with a sharp edge in the form of a keel, line running along the axis of symmetry of the piece.
In its upper part it is provided with a tongue-and-groove coupling in the form of a parallelepiped, having a tongue at one of its ends and groove at the other, permitting the parts to couple together. Said tongue-and-groove coupling borders the piece in its upper plane. The width of the tongue-and-groove coupling is less than the total width of the lower zone.

### Upper zone:

In the form of a trapezoid prism whose larger base rests on the lower volume, but displaced from it by a length equal to that of the tongue-and-groove coupling. In the centre of symmetry of the prism and bordering the bases of the trapezium, a gap is left in the form of a parallelepiped, which is located longitudinally on the lower base and which serves as a cavity for housing the pipelines to be laid and protected.

In the upper part of the trapezoid prism are two parallelepipeds longitudinally annexed to both ends of the small base which serve as lugs for allowing another parallelepiped of the necessary dimensions for acting as a closure slab of the upper volume, at the same time as protecting the pipelines housed in the cavity.

In order to secure said slab, it has two rods traversing it, which pass through the lugs and the slab itself, preventing the waves from extracting it fro m its location.

The piece has four suspension rings materialised by U-shaped rods whose arms are secured and embedded in the mass of reinforced concrete or similar, with which the piece or block is constructed. The location of the coupling rings is determined by the centre of gravity of the piece, occupying positions that are aligned in the lugs of the upper zone.

The different pieces will remain connected by the tongue-and-groove coupling which, moreover, are vertically passed through by some traversing rods which are introduced from the upper lugs until reaching the mid-body of the lower zone, thus improving the connectivity among the pieces and their correct location.

The material used in the construction of the piece will be concrete of the type and quality specified in standards applying as the case might be. The manufacture of the piece will be done individually by moulding by means of formwork, with the upper closing slab being able to be manufactured separately. In particular or exceptional cases, another material will be able to be used for its construction. The geometry of the piece is especially designed for permitting concreting of all zones of the piece and the stripping to be done easily.

In order to define the modular geometry and facilitate a better understanding of the characteristics of this invention, and forming an integral part of this specification, a series of plans are attached in which, on an illustrative rather than limiting basis, the following have been represented:

### BRIEF DESCRIPTION OF THE DRAWINGS

**Figure 1**.- Is a perspective view of an improved artificial element, designed for the anchoring, installation and protection of submarine outfalls or submarine pipelines on sandy or non-consolidated sea-beds, forming the inventive object, with its slab exploded.
**Figure 2**.- Is a view similar to the above, from a point lower than the artificial element.
**Figure 3****.-** Is a perspective view in order to observe the assembly arrangement in the linear coupling of several elements.
**Figure 4****.-** Is a view similar to figure 3, from the other side, in order to see the projecting end of the elements.
**Figure 5****.-** Is a partial view, in cross-section and transverse elevation, of the settlement and securing of the slab to the upper zone.
**Figure 6****.-** Is a perspective view in cross-section and transverse elevation, of the tongue-and-groove coupling of two consecutive elements and the securing by means of threaded rods or studs.
**Figure 7****.-** Is a view in longitudinal elevation of the element shown in the same position of figure 4.
**Figure 8****.-** Is a plan view of the element according to figure 1.

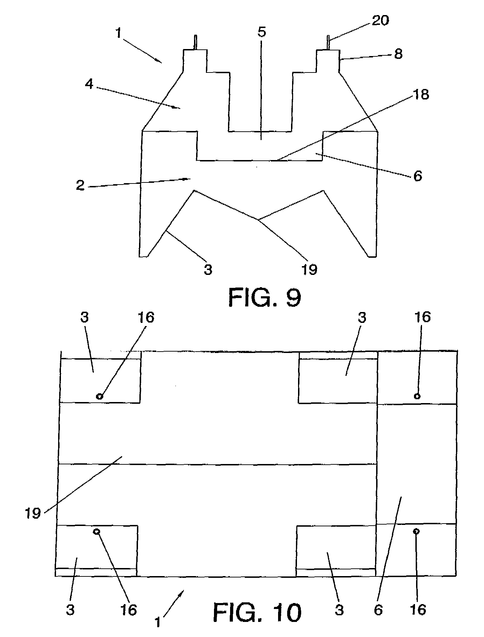

**Figure 9****.-** Is a view in transverse elevation of the same element.
**Figure 10****.-** Is a lower plan view of the same element.

### DESCRIPTION OF THE PREFERRED FORM OF EMBODIMENT

Making reference to the numbering adopted in the figures, we can see how the improved artificial element, designed for the anchoring, installation and protection of submarine outfalls or submarine pipelines on sandy or non-consolidated sea-beds, which the invention proposes, is in general referenced with the number 1 and materialised in a parallelepiped body which we can regard as being formed from a lower parallelepiped zone 2 with four legs 3 at its corners, on which fits another upper zone 4 of trapezoid cross-section, both having the same length but being linearly offset as it was already stated.

This stagger produces a projection or overhang at one end and a recess at the other, both of equal volume and which define the means of tongue and groove interconnection in the linear coupling between blocks or pieces 1.

The upper zone 4 presents the central longitudinal recess 5, that constitutes the channel for location and protection of submarine outfalls or submarine pipelines. The larger base of this upper zone has a lower projection 6. The upper base 7 has longitudinal ribs 8 and tightly fitting between them is the slab 9 covering the pipeline.

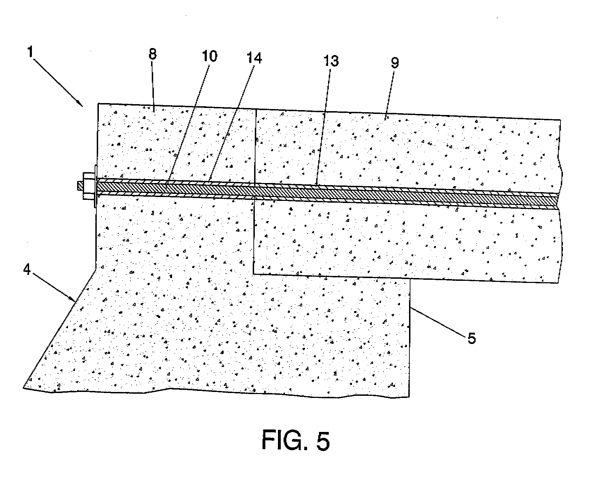

Figure 5 shows the means of securing of the slab 9 to the upper zone 4 of the body by means of nuts mounted on the emerging ends of the threaded rods 10, or using any other means of securing. The rods 10 pass through the holes 11 in the sides of the ribs 8 facing the holes 12 of the slab 9. The holes 11 and 12 are formed from sockets or tubular sections 13 and 14 arranged blind in the formwork of the respective mould, as is habitual.

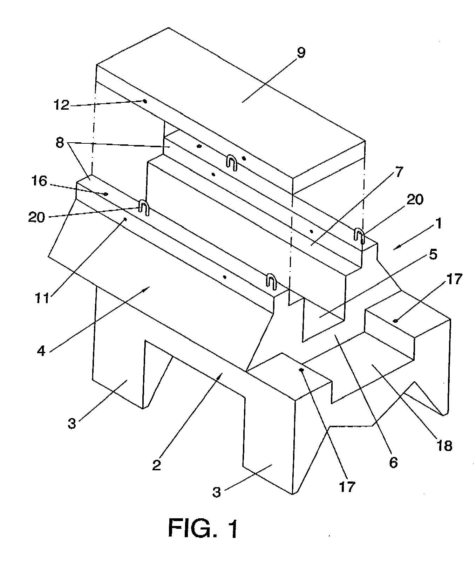

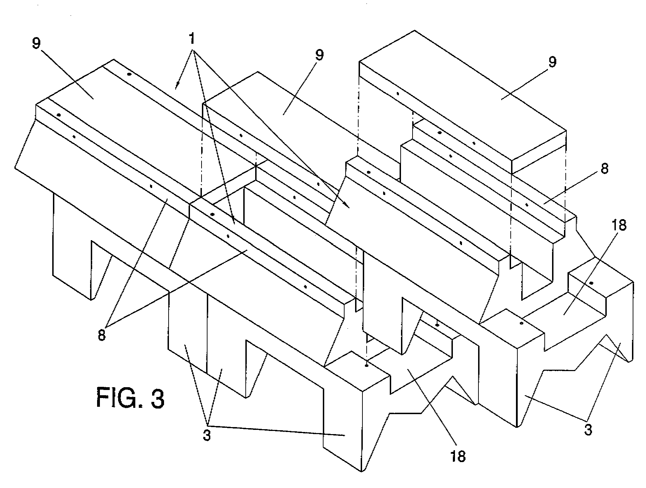

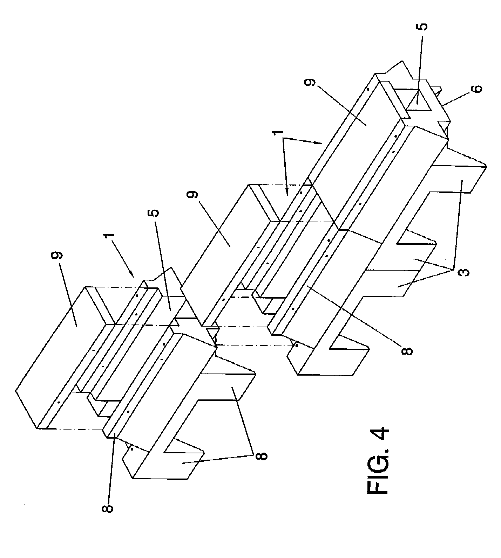

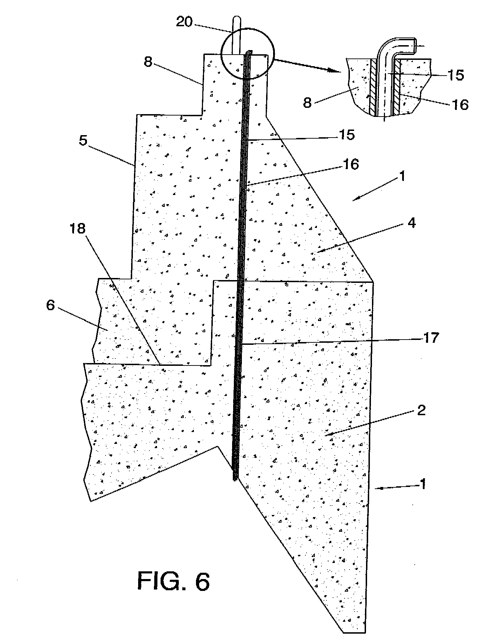

Figures 3 and 4 show the juxtaposed assembly of piecess 1 which afterwards remain perfectly seated and secured by means of the vertical rods 15 (see figure 6) passing through the pipelines 16 and 17 assembled blind in the formwork. As the dimensioning is very precise a good alignment is achieved for the passage of the rods 15, as well as for the rods 10. Note that the lower prismatic projection 6 of the projecting or tongue part of the tongue and groove coupling (see figure 4) fits into the receiving housing 18 (see figure 1) formed in the adjacent element or piece 1.

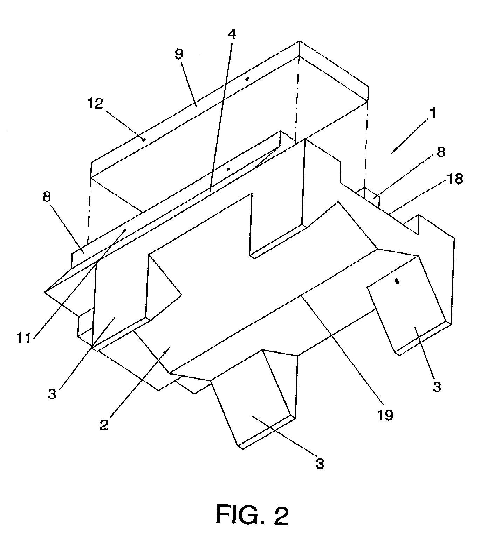

In figure 2 the longitudinal edge of the lower face of the piece 1 can be clearly seen, referenced with 19, which contributes to the seating or immobility of the piece.

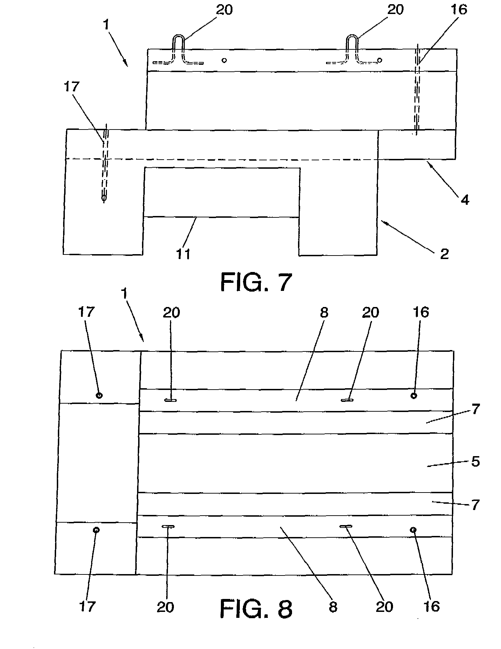

The reference 20 designates the fastenings in the form of an "omega" arranged prior to setting the concrete (better seen in figure 7),

## Claims

1. **IMPROVED ARTIFICIAL ELEMENT WHICH IS INTENDED FOR THE ANCHORING, INSTALLATION AND PROTECTION OF SUBMARINE OUTFALLS OR SUBMARINE PIPELINES ON SANDY OR NON-CONSOLIDATED SEA-BEDS, characterised in that** it consists of a parallelepiped body (1) in which is defined a lower zone (2) that rests on fo ur supports or legs (3) located in the corners and which has its lower face convex with transverse cross-section in the form of a "V" which defines a middle longitudinal edge (19), fitting over this lower zone (2) an upper zone (4), also parallelepiped, and of trapezoid cross-section, with a central rectangular lower projection (6) and a rectangular recess (5) in the upper side, both zones (2, 4) having the same length but being longitudinally offset in order to define complementary means of a tongue and groove coupling in the longitudinal juxtaposition or in line, with the rectangular recesss (5) being extended and defining a sea-bed for laying the submarine pipeline or outfall, the sea-bed being covered with slabs (9) which rest on the upper base of said upper zone (4), flanked by separate longitudinal ribs (8) formed in the ends of said upper base of the trapezoid section.

2. **IMPROVED ARTIFICIAL ELEMENT WHICH IS INTENDED FOR THE ANCHORING, INSTALLATION AND PROTECTION OF SUBMARINE OUTFALLS OR SUBMARINE PIPELINES ON SANDY OR NON CONSOLIDATED SEA-BEDS,** according to claim 1, **characterised in that** the slabs (9) are secured to their respective body (1) and said bodies (1) are secured together in the zones of overlap or tongue and groove coupling by means of threaded rods (10, 15) passing through holes made for such purpose in the mould or formwork, and by nuts or other means of locking.

3. **IMPROVED ARTIFICIAL ELEMENT WHICH IS INTENDED FOR THE ANCHORING, INSTALLATION AND PROTECTION OF SUBMARINE OUTFALLS OR SUBMARINE PIPELINES ON SANDY OR NON-CONSOLIDATED SEA-BEDS,** according to claim 2, **characterised in that** the slabs (9) are fixed to their respective body (1) by means of at least two threaded rods (10) that traverse them horizontal and transversely, together with the longitudinal ribs (9) flanking them.

4. **IMPROVED ARTIFICIAL ELEMENT WHICH IS INTENDED FOR THE ANCHORING, INSTALLATION AND PROTECTION OF SUBMARINE OUTFALLS OR SUBMARINE PIPELINES ON SANDY OR NON-CONSOLIDATED SEA-BEDS,** according to claim 2, **characterised in that** the bodies (1) are secured together by means of studs or threaded rods (15) in the vertical direction and which traverse the longitudinal ribs (8) in the projected or overlapped end zone, continuing on as far as traversing the lower zone of the other body (1).

5. **IMPROVED ARTIFICIAL ELEMENT WHICH IS INTENDED FOR THE ANCHORING, INSTALLATION AND PROTECTION OF SUBMARINE OUTFALLS OR SUBMARINE PIPELINES ON SANDY OR NON-CONSOLIDATED SEA-BEDS,** according to claim 1, **characterised in that** there exist means of suspension and transport for the pieces (1), defined by rings (20) in the form of an "omega" whose ends are embedded in the material forming the block in the moulding operation and are located at upper points of the said ribs balancing the total weight.
